# EUROPÄISCHE PATENTSCHRIFT

(11) **EP 0 680 815 B1**
(45) Veröffentlichungstag und Bekanntmachung des Hinweises auf die Patenterteilung: **17.03.1999**
(21) Anmeldenummer: 95101875.3
(22) Anmeldetag: 11.02.1995
(51) Int. Cl.: B29C 47/68, B01D 29/11, B01D 35/12, B01D 36/00

(54) **Filtereinrichtung für Strangpressen**
Filtration device for extrusion presses
Dispositif de filtration pour presses à extruder

(30) Priorität: 03.05.1994 DE 4415477; 09.06.1994 DE 4420119
(43) Veröffentlichungstag der Anmeldung: 08.11.1995
(73) Patentinhaber: Kreyenborg Verwaltungen und Beteiligungen GmbH & Co. KG, D-48157 Münster (DE)
(72) Erfinder: Kreyenborg, Jan-Udo, D-48145 Münster (DE)
(74) Vertreter: Habbel, Hans-Georg, Dipl.-Ing.

(56) Entgegenhaltungen:
- EP-A- 0 247 468
- WO-A-90/00434
- DE-C- 3 941 831
- DE-C- 4 125 181
- DE-C- 4 305 770
- GB-A- 2 159 064
- US-A- 4 299 707
- US-A- 4 734 188

## Beschreibung

Die Erfindung bezieht sich auf eine Filtereinrichtung gemäß dem Oberbegriff des Hauptanspruches.

Eine gattungsbildende Filtereinrichtung ist z. B. durch die DE-41 25 181 C1 bekanntgeworden, wobei bei dieser bekannten Anordnung eine Siebplatte eingesetzt wird, die sich mit ihrer Sieböffnungsebene quer zur Längsachse des eigentlichen Siebbolzens erstreckt. Weiterhin sind auf der Anströmseite, d. h. also der Schmutzsiebseite der Siebplatte Kerzenfilterpatronen vorgesehen. Hier wird also bei einer normalen Filtereinrichtung, einer Feinfiltereinrichtung oder einer Gelfiltereinrichtung die Kerzenfilterpatrone von außen nach innen angeströmt und beim Rückspülen erfolgt die Führung des Kunststoffes durch die Kerzenfilterpatrone von innen nach außen. Da durch den Einsatz der Kerzenfilterpatronen die Oberfläche des Siebes gegenüber der normalen Oberfläche eines handelsüblichen Siebes erheblich vergrößert wird, ist es also möglich, die Zeitspanne, in der ein Rückspülen sowie die Häufigkeit eines Siebwechsels erfolgen muß, zu vergrößern.

In der EP-A 247 468 wird eine Filtervorrichtung zum gleichmäßigen Filtrieren von Kunststoffschmelzen beschrieben, wobei Kerzenfilter in einem Filtertopf und nicht in einem Siebbolzen angeordnet sind. Sind mehrere Kerzenfilter in dem Siebtopf vorgesehen, wird gemäß diesem Vorschlag vorgesehen, daß die Kerzenfilter entlang konzentrischer Kreise im zylindrischen Filtergehäuse angeordnet sind und daß die Packungsdichtung der Kerzenfilter vom Umfang in das Zentrum des Filtergehäuses abnimmt.

In der US-A-51 22 286 wird ein Siebbolzen mit einem Filter beschrieben, der parallel zur Längsachse des jeweiligen Siebbolzens angeordnet ist und von innen nach außen durchströmt wird. Die Filtertläche ist aber für gewisse Einsatzfälle relativ klein.

Der Erfindung liegt die Aufgabe zugrunde, die Wirkungsweise solcher Filtereinrichtungen noch zu vergrößern, d. h. zu erreichen, daß eine außergewöhnlich große Filtertläche in handelsüblichen Einrichtungen zur Verfügung gestellt werden kann.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß auch im vorliegenden Fall Kerzenfilterpatronen eingesetzt werden, die mit ihrer Längsachse aber nicht quer zum verschiebbaren Siebbolzen ausgerichtet sind, sondern diese Kerzenfilterpatronen erstrecken sich in Längsachse des Siebbolzens und werden von außen nach innen durchströmt. Vorzugsweise ist eine Vielzahl von Kerzenfilterpatronen vorgesehen, die auf dem Umfang des Siebbolzens dicht nebeneinanderstehend angeordnet sind, so daß eine unwahrscheinlich große Filterfläche zur Verfügung gestellt werden kann, während aber die Bohrung im Gehäuse den üblichen Größen der Siebbolzen entspricht.

Werden die Kerzenfilter zusätzlich als Plisseefilter ausgebildet, wird wiederum die Filteroberfläche vergrößert und damit die Leistung der Maschine verbessert.

Sind - wie dies üblich ist - zwei Siebbolzen in einem Gehäuse angeordnet, ist ein einfaches Auswechseln der Filterpatronen möglich, ohne daß die Maschine stillgesetzt werden muß, d. h. also, die bisher im Stand der Technik erforderlichen Anfahrventile werden vermieden.

Ein Ausführungsbeispiel der Erfindung wird nachfolgend anhand der Zeichnungen erläutert. Die Zeichnungen zeigen dabei in
- Fig. 1 a - d: einen in einem Gehäuse angeordneten Siebbolzen mit eingesetzten Kerzenfilterpatronen in den vier verschieden möglichen Stellungen, in
- Fig. 2: einen Schnitt durch ein Gehäuse mit zwei übereinander angeordneten Siebbolzen und in
- Fig. 3: eine schaubildliche Darstellung eines eines Teiles eines Plisseekerzenfilters.

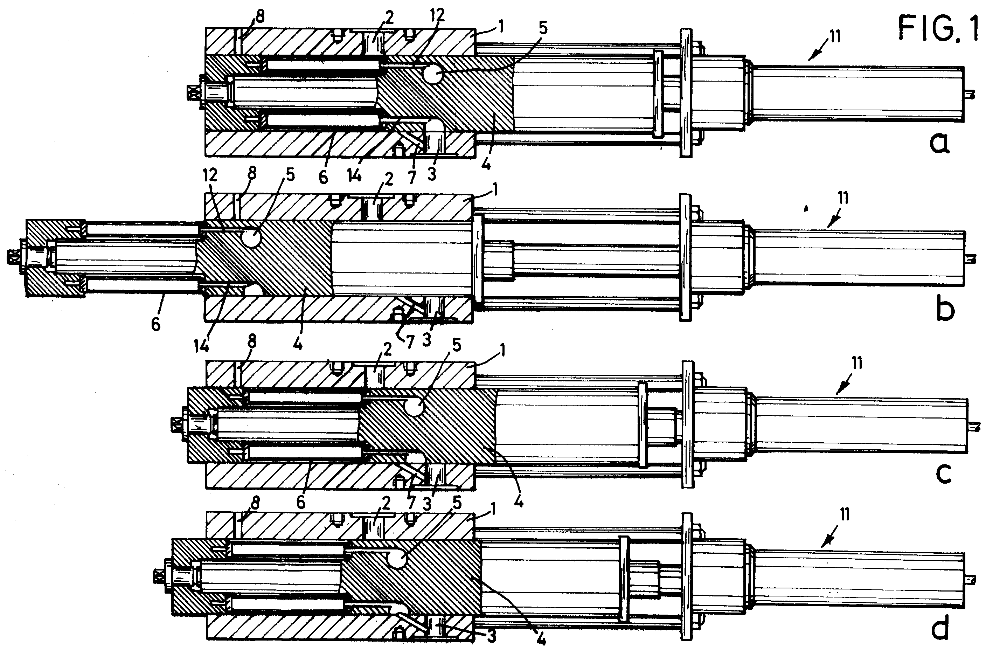

In den Figuren 1a bis 1d ist ein Gehäuse 1 dargestellt, in dem ein Siebbolzen 4 saugend dicht hinund herverschiebbar ist, wobei der Antrieb dieses Siebbolzens über eine nicht näher dargestellte Hydraulikzylinderanordnung 11 erfolgt. Der eigentliche Siebbolzen 4 weist an seinem Umfang eine Ausnehmung auf, in der die in der Zeichnung erkennbaren Kerzenfilter 6 in Umfangsrichtung auf dem Siebbolzen 4 sich parallel zur Längsachse des Siebbolzens 4 erstreckend angeordnet sind. In dem Gehäuse 1 ist ein Eintrittskanal 2 und ein Austrittskanal 3 vorgesehen.

In dem eigentlichen Siebbolzen 4 ist zusätzlich ein Ringkanal 5 angeordnet, der über Stichkanäle 12 und 14 mit dem Inneren der eigentlichen Kerzenfilter 6 in Verbindung steht.

Mit 7 ist bei dem dargestellten Ausführungsbeispiel ein Rückspüleintrittskanal und mit 8 ein Rückspülaustrittskanal bezeichnet, wobei der Rückspüleintrittskanal 7 mit der Innenseite des Kerzenfilters 6 und der Rückspülaustrittskanal 8 mit der Außenseite des Kerzenfilters 6 in Verbindung steht.

In Fig. 1a ist die sogenannte Produktionsstellung dargestellt, bei welcher das zu filtrierende Gut durch den Eintrittskanal 2 zugeführt und die Kerzenfilter 6 von außen umspült und aufgrund des herrschenden Druckes durch die Siebfläche der Kerzenfilter 6 in das Innere derselben eingepreßt wird. Von hier aus tritt das filtrierte Gut durch die Stichkanäle 12 und 14 aus und gelangt in den Ringkanal 5 und von diesem in den Austrittskanal 3.

Sollen die eigentlichen Kerzenfilter 6 gewechselt werden, wird der Siebbolzen 4 in die in Fig. 1b dargestellte Stellung geführt, in der nun einerseits Eintrittskanal 2 und der Austrittskanal 3 durch den Körper des Siebbolzens 4 verschlossen sind, aber auch weiterhin der Rückspülaustrittskanal 8 und der Rückspüleintrittskanal 7 geschlossen sind.

In Fig. 1c ist eine Sperrstellung dargestellt, die keiner weiteren Erläuterungen bedarf.

In Fig. 1d ist die Rückspülstellung dargestellt und es ist erkennbar, daß der Rückspüleintrittskanal 7 nunmehr über den Ringkanal 5 mit dem Inneren der Kerzenfilter 6 in Verbindung steht und die Außenseite der Kerzenfilter 6 über den Rückspülaustrittskanal 8 mit der Außenseite des Gehäuses 1 in Verbindung steht.

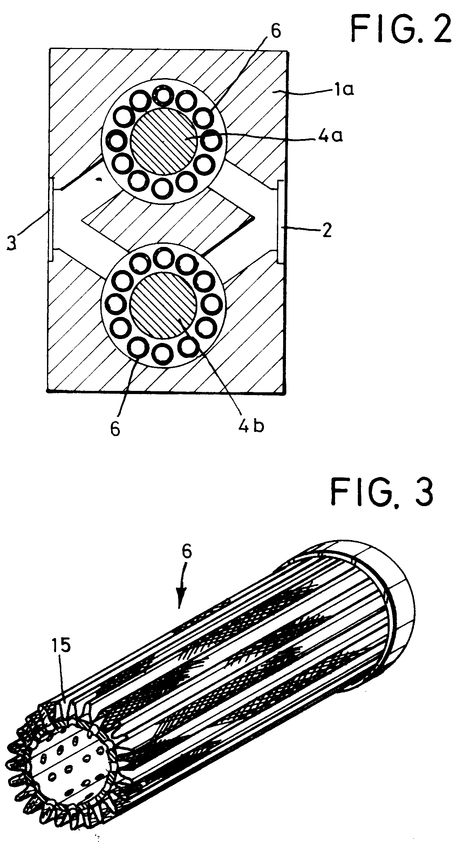

Bei der Darstellung in Fig. 2 ist ein Gehäuse 1a im Schnitt dargestellt, in dem zwei Siebbolzen 4a und 4b übereinander angeordnet sind, die über entsprechende Teilkanäle, wie dies im Stand der Technik allgemein bekannt ist, mit dem Eintrittskanal 2 bzw. dem Austrittskanal 3 in Verbindung stehen.

Bei einer solchen Anordnung ist es möglich, dann, wenn der eine Siebbolzen 4a in der Produktionsstellung steht, den anderen Siebbolzen 4b in die Wechselstellung gemäßFig. 1b zu bringen, so daß ohne Unterbrechung der Produktion die Filterkerzen gewechselt werden können.

In Fig. 3 ist nur zur Verdeutlichung der grundsätzlichen Idee ein Teil eines Plisseekerzenfilters 6 dargestellt und es ist erkennbar, daß durch die Vielzahl der Falten 15 die Sieboberfläche erheblich vergrößert wird.

## Patentansprüche

1. Filtereinrichtung für Strangpressen und Spritzgießmaschinen zur kontinuierlichen Verarbeitung von thermoplastischen Kunststoffen mit wenigstens einem zwischen einem Eintrittskanal (2) und einem Austrittskanal (3) eines Gehäuses (1, 1a)) verschiebbar angeordneten Siebbolzen (4, 4a, 4b) mit auswechselbaren als Kerzenfilter (6) ausgebildeten Siebelementen mit einer Anströmseit und einer Abströmseite, dadurch gekennzeichnet, daß die Kerzenfilter (6) in Umfangsrichtung auf dem Siebbolzen (4) sich parallel zur Längsachse des Siebbolzens (4) erstreckend angeordnet sind.

2. Filtereinrichtung nach Anspruch 1, dadurch gekennzeichnet, daß das Innere der Kerzenfilter (6) mit einem im Siebbolzen ausgebildeten Ringkanal (5) in Verbindung steht, der in der Produktionsstellung mit dem Austrittskanal (3) des Gehäuses (1) in Verbindung bringbar ist.

3. Filtereinrichtung nach einem der vorhergehenden Ansprüche, dadurch gekennzeichnet, daß die Kerzenfilter (6) als Plisseefilter ausgebildet sind.

4. Filtereinrichtung nach einem der vorhergehenden Ansprüche, dadurch gekennzeichnet, daß ein Rückspüleintrittskanal (7) einerseits in den Austrittskanal (3) und andererseits in den den Siebbolzen (4) aufnehmenden Raum des Gehäuses (1) mündet und ein Rückspülaustrittskanal (8) aus dem den Siebbolzen (4) aufnehmenden Raum innerhalb des Gehäuses (1) nach außen hin mündet.

5. Filtereinrichtung nach Anspruch 4, dadurch gekennzeichnet, daß der Rückspüleintrittskanal (7) und der Rückspülaustrittskanal (8) über die Länge des Kerzenfilterteiles des Siebbolzens (4) gesehen an gegenüberliegenden Enden angeordnet sind.

6. Filtereinrichtung nach einem der vorhergehenden Ansprüche, dadurch gekennzeichnet, daß die Kerzenfilter (6) zu Filterzwecken von außen nach innen und zu Rückspülzwecken von innen nach außen durchströmbar sind.

## Claims

1. Filter device for extruders and injectionmoulding machines for the continuous processing of thermoplastics, with at least one screen plunger (4, 4a, 4b), which is arranged displaceably between an inlet passage (2) and an outlet passage (3) of a housing (1, 1a) and has replaceable screen elements which are designed as candle filters (6), and have an inlet flow side and an outlet flow side, characterized in that the candle filters (6) are arranged in the circumferential direction on the screen plunger (4) and extend parallel to the longitudinal axis of the screen plunger (4).

2. Filter device according to Claim 1, characterized in that the interior of the candle filters (6) is connected to an annular passage (5) which is formed in the screen plunger and, in the production position, can be moved into connection with the outlet passage (3) of the housing (1).

3. Filter device according to one of the preceding claims, characterized in that the candle filters (6) are designed as pleated filters.

4. Filter device according to one of the preceding claims, characterized in that a backwash inlet passage (7) emerges, on the one hand, into the outlet passage (3) and, on the other hand, into the space in the housing (1) which accommodates the screen plunger (4), and a backwash outlet passage (8) emerges to the outside from the space accommodating the screen plunger (4) within the housing (1).

5. Filter device according to Claim 4, characterized in that, viewed along the length of the candle filter part of the screen plunger (4), the backwash inlet passage (7) and the backwash outlet passage (8) are arranged at opposite ends.

6. Filter device according to one of the preceding claims, characterized in that the candle filters (6) can be flowed through from the outside inward for filtering purposes and from the inside outward for backwashing purposes.

## Revendications

1. Dispositif de filtration pour presses à extruder et presses d'injection destinées à la transformation continue de résines synthétiques thermoplastiques, comprenant au moins un bloc filtrant (4, 4a, 4b) disposé coulissant entre un canal d'entrée (2) et un canal de sortie (3) d'un corps (1, 1a) et muni d'éléments filtrants interchangeables constitués par des filtres à bougies (6) et qui présente un côté d'attaque de l'écoulement et un côté de fuite de l'écoulement, caractérisé en ce que les filtres à bougies (6) sont répartis dans la direction circonférentielle sur le bloc filtrant (4) en s'étendant parallèlement à l'axe longitudinal du bloc filtrant (4).

2. Dispositif de filtration selon la revendication 1, caractérisé en ce que l'espace intérieur des filtres à bougies (6) est en communication avec un canal annulaire (5) formé dans le bloc filtrant et qui peut être mis en communication avec le canal de sortie (3) du corps (1) dans la position de production.

3. Dispositif de filtration selon une des revendications précédentes, caractérisé en ce que les filtres à bougies (6) sont constitués par des filtres plissés.

4. Dispositif de filtration selon une des revendications précédentes, caractérisé en ce qu'un canal d'entrée de nettoyage par écoulement inverse (7) débouche, d'un côté, dans le canal de sortie (3) et, de l'autre côté, dans l'espace du corps (1) qui reçoit le bloc filtrant (4), et un canal de sortie de nettoyage par écoulement inverse (8) débouche à l'extérieur en partant de l'espace intérieur du corps (1) qui reçoit le bloc filtrant.

5. Dispositif de filtration selon la revendication 4, caractérisé en ce que le canal d'entrée de nettoyage par écoulement inverse (7) et le canal de sortie de nettoyage par écoulement inverse (8) sont disposés à des extrémités opposées, vu sur la longueur de la partie formant filtres à bougies du bloc filtrant (4).

6. Dispositif de filtration selon l'une des revendications précédentes, caractérisé en ce que les filtres à bougies (6) peuvent être traversés par l'écoulement en allant de l'extérieur vers l'intérieur pour la filtration et en allant de l'intérieur vers l'extérieur pour le nettoyage par écoulement inverse.
